# EUROPEAN PATENT APPLICATION

(11) **EP 1 643 365 A2**
(43) Date of publication of application: **05.04.2006**
(21) Application number: 04027748.5
(22) Date of filing: 23.11.2004
(51) Int. Cl.: G06F 11/14

(54) **Computer system**

(30) Priority: 30.09.2004 JP 2004286562
(71) Applicant: Hitachi Ltd., Tokyo 100-8280 (JP)
(72) Inventor: Nakano, Takahiro, Hitachi, Ltd.Int.Prop.Group, Chiyoda-ku Tokyo 100-8220 (JP); Hara, Junichi, Hitachi, Ltd.Int.Prop.Group, Chiyoda-ku Tokyo 100-8220 (JP); Akagawa, Etsutaro, Hitachi, Ltd.Int.Prop.Group, Chiyoda-ku Tokyo 100-8220 (JP)
(74) Representative: Beetz & Partner

(57) **Abstract**

The invention relates to a computer system (1000) comprising a storage device (100).

The server (SV1) receives instructions to acquire snapshot images from control server (20), acquires the snapshot images of logic disk (110), and stores them in logic disk (130), and at the same time acquires snapshot images of logic disk (120), and stores them in logic disk (140). The server (SV1) constructs a virtual file server environment using snapshot images of system files stored in logic disk (130), and provides data file snapshot images stored in logic disk (140) to the client CL.

## Description

### CROSS REFERENCE TO RELATED APPLICATION

This application relates to and claims priority from Japanese Patent Application No. 2004-286562, filed on September 30, 2004, the entire disclosure of which is incorporated by reference.

### BACKGROUND

The present invention relates to technology that acquires and provides a snapshot image of information resources stored in a storage device.

In recent years, there has been popularization of snapshots for performing backup for which an instant image of data stored in a disk device or storage device is acquired at a specific timing. The acquired snapshot image is stored in the hardware of the server that provides the snapshot image. Via various applications, users can access the server that provides the snapshot images, and by viewing the data that has been backed up, can receive provision of backup data.

There is also a technology that, by creating a directory for each date on which a snapshot was taken under the directory that stores original images and storing acquired snapshot images in the directory with the corresponding date, provides snapshot images on the same server. By accessing the directory set with the date of the snapshot image he wishes to access, the user receives provision of the snapshot image.

### SUMMARY

However, with the prior art described above, the hardware of the server that provides the snapshot image needs to have the same number as the snapshot image, which is costly, and also has the problem of the equipment becoming large in scale.

When providing snapshot images on the same server, the snapshot images are stored in a directly for each date, so the path name for accessing snapshots of the same file changes. Therefore, with applications that access files using a fixed path, there was the problem that, using a snapshot image, it is difficult to return back to the state of an application at the point that the snapshot image was acquired.

Also, when providing snapshot images on the same server, it was not possible to save information that can change during operation such as user authentication information in the state when the snapshot image was acquired. Therefore, there was the problem that it is difficult to maintain a secure state at the point that the snapshot image is acquired.

Taking into consideration these problems, and there is a need for a system with which a user can access snapshot images easily without increasing the server hardware.

To solve at least part of the problems described above, a first aspect of the present invention provides a computer system comprising a storage device that stores information resources and an information resource control device connected to said storage device. The storage device may comprise a storage unit that has an information resource storage area that stores said information resources, and a snapshot image storage area that stores a snapshot image that shows an image of said information resources at a specified point in time. The information resource control device may comprise a first provision module that provides the information resources stored in the information resource storage area of the storage device, a snapshot processing module that stores the acquired snapshot image in the snapshot image storage area, a generating module that generates a second provision module that provides the snapshot image that is stored in the snapshot image storage unit, and/or an execution processing module that performs provision of the snapshot image by the generated second provision module.

According to the first aspect of the present invention, an information resource control device may provide snapshot images acquired at a specified timing without adding storage devices for storing snapshot images.

In the first aspect of the present invention, environmental information resources that set the environment of the first provision module and provision information resources provided by the first provision module may be stored in the information resource storage area of the storage device. Further, the snapshot processing module may acquire a snapshot image of the environmental information resources and the provision information resources, and the generating module generates a second provision module based on the acquired snapshot image.

According to the above structure of the first aspect of the present invention, environmental information resources may be acquired by using a snapshot image, and thus the environment of the second provision module is easily and rapidly established.

In the computer system of the first aspect of the present invention, first environmental information resources that set the environment of the first provision module and provision information resources provided by the first provision module may be stored in the information resource storage area of the storage device. The information resource control device may further comprise an incorporation module that incorporates second environmental information resources that set the environment of the second provision module. The snapshot processing module may acquire a snapshot image of the provision information resources, and the generating module may generate the second provision module based on the incorporated second environmental information resources and the snapshot image of the acquired provision information resources.

According to the above structure, in parallel with the process of acquiring snapshot images, the environmental information resources of the second provision module may be incorporated, and thus the processing effectiveness of the information resource control device would be improved.

In the computer system of the first aspect of the present invention, the snapshot image may comprise the same path structure as the path structure at the point when said snapshot image of said information resources stored in said information resource storage area of said storage device is acquired. In accordance with this structure, it is possible to perform provision of a snapshot image using the same path as the path to the original information resource.

In the computer system of the first aspect of the present invention, the information resources may include attribute information that shows the attributes of the storage device. The information resource control device may further comprise a setting information storage unit that stores setting information recording the attributes to be set in the second provision module and an attribute information setting module that sets attribute information of the second provision module based on the setting information. In accordance with this structure, the attribute information of the second provision module may be easily set into a predetermined attribute information by using the setting information.

The setting information may contain the IP address of the second provision module as the attribute. The setting information may contain the name of the second provision module as the attribute. In accordance with this structure, it is possible to easily set information that specifies the second provision module.

In the computer system of the first aspect of the present invention, the first provision module may control access to the information resources based on access control information that controls access to the storage device, this being stored in the information resource storage area of the storage device. As the access control information, it is also possible to use, for example, user authentication information used for authenticating a user who is accessing the storage device, or sharing information that specifies the sharing state of the information resources. The snapshot processing module may also store in the snapshot image storage area the access control information at the point that the snapshot image of the storage device was acquired.

In accordance with this structure, it is possible to apply to the second provision module the access control information at the point that the snapshot image was acquired. Therefore, it is possible to maintain the security level at the time the snapshot image was acquired.

In the computer system of the first aspect of the present invention, the name of the second provision module may be a name that shows the relative time in relation to the point at which the snapshot image was acquired. The information resource control device may further comprise a decision module that decides whether an activated second provision module exists before generating the second provision module, and a change processing module that, when it is decided that the activated second provision module exists, changes the name of the already activated second provision module.

In accordance with this structure, it is possible to provide a snapshot image acquired in time series using a clear name. Therefore, a user who is receiving provision of a snapshot image can easily access a desired snapshot image.

A second aspect of the present invention provides a storage device that stores information resources. The storage device may comprise a storage unit that has an information resource storage area and a snapshot image storage area, wherein the information resource storage area stores the information resources, and wherein the snapshot image storage area stores snapshot images that show images of the information resources at a specified point in time, an instruction receiving module that receives instructions for getting the information resource snapshot images from a control device that controls the information resources that are stored in the storage device, and/or a snapshot processing module that, based on the instructions, acquires a snapshot image of the information resources, and stores this in the snapshot image storage unit.

In accordance with this structure, it is possible to provide snapshot images acquired at a specified timing using the logical area formed on the storage device. Specifically, it is possible to provide snapshot images without increasing the physical storage units of a storage device.

It is also possible to use a computer system formed from the storage device of the second aspect of the present invention, a first provision module that provides the information resources stored in the information resource storage unit of the storage device, a snapshot image acquiring instruction module that gives instructions to the storage device on getting a snapshot image of the information resources stored in the information resource storage unit at any point in time, a generating module that generates a second provision module that has a function of providing a snapshot image stored in the snapshot image storage unit of the storage device, and an information resource control device that comprises an execution processing module that executes provision of snapshot images by the second provision module. In accordance with this structure, it is possible to reduce the processing load of the information resource control device because the storage device acquires the snapshot images.

In the present invention, the various aspects described above may be used by suitably combining or omitting parts. Also, in addition to the information resource control device, the computer system formed from a storage device and the information resource control device, the storage device, or the computer system formed from the storage device and the information resource control device described above, the present invention may also be formed as an information resource control method using an information resource control device, a snapshot image provision method using a computer system, a snapshot image acquiring method using a storage device, a computer program for providing a snapshot image to an information resource control device, a computer program for acquiring a storage device snapshot image, or as a recording medium that records these computer programs such that they can be read by a computer. For any of the structures, each of the embodiments described above can be suitably applied. Examples that may be used as recording media that can be read by a computer include, for example, flexible disks, CD-ROMs, DVD-ROMs, photo magnetic disks, IC cards, various types of hard disk.

### BRIEF DESCRIPTION OF THE DRAWINGS

Figure 1 is an explanatory diagram that shows an example of the system overview for the first embodiment.
Figure 2 is an explanatory diagram that shows an example of a function block of a storage device 100 for the first embodiment.
Figure 3 is an explanatory diagram that shows an example of the structure of the server SV1 for the first embodiment.
Figure 4 is an explanatory diagram that shows an example of the contents of the logical volume 110 of the first embodiment.
Figure 5 is a flow chart that explains the virtual file server generating process for the first embodiment.
Figure 6 is environmental information 214 for the first embodiment.
Figure 7 is an explanatory diagram that shows an example of user authentication information for the first embodiment.
Figure 8 is an explanatory diagram that shows an example of file sharing setting information for the first embodiment.
Figure 9 is an explanatory diagram that shows an example of a setting file for the first embodiment.
Figure 10 is an explanatory diagram that shows an example of environmental information 215 for the first embodiment.
Figure 11 is an explanatory diagram that shows an example of the screen of the client CL for the first embodiment.
Figure 12 is an explanatory diagram that shows an example of computer system 2000 for the second embodiment.
Figure 13 is an explanatory diagram that shows an example of the function block of storage device 600 for the second embodiment.
Figure 14 is a flow chart that explains the virtual file server generating process for the second embodiment.
Figure 15 is a flow chart that explains the generation control process for a variation example.
Figure 16 is an explanatory diagram that shows an example of the system configuration of computer system 3000 of a variation example.
Figure 17 is a flow chart that explains the snapshot acquisition process for a variation example.

### DETAILED DESCRIPTION OF THE PREFERRED EMBODIMENTS

Following, several embodiments of the present invention will be explained.

### A. First Embodiment:

### A1. System Configuration:

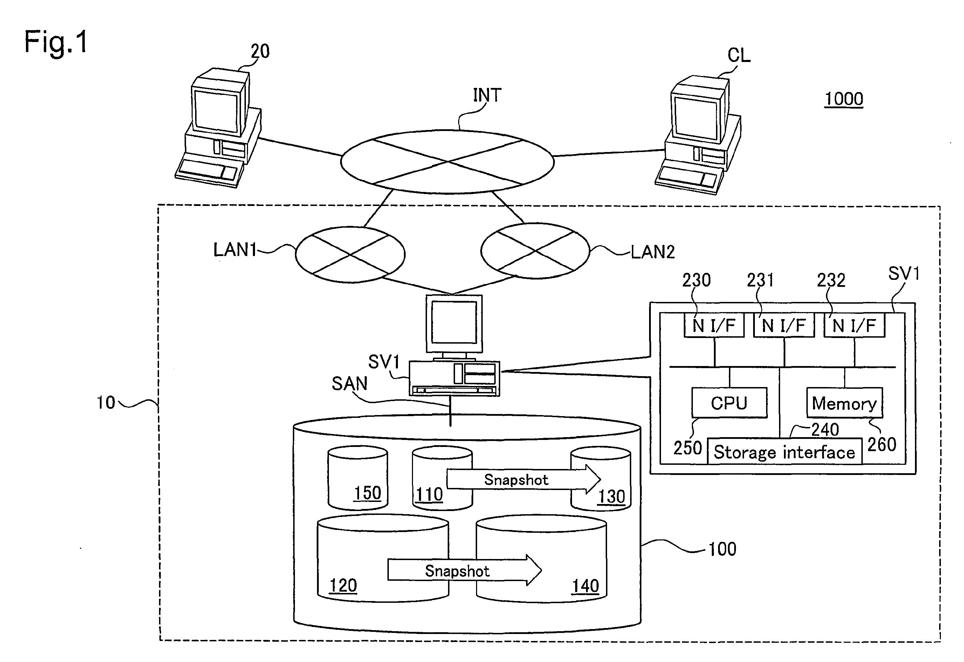

Figure 1 is an explanatory diagram that shows a schematic example of the system of the first embodiment. A computer system 1000 has a data center 10, a client computer CL, and a control server device 20 connected via internet INT. The data center 10 comprises a server computer SV1 and a storage device 100, and the server computer SV1 is connected to internet INT via local area network LAN1 and local area network LAN2. The server computer SV1 and the storage device 100 are connected via a storage network SAN (Storage Area Network) formed from fiber channels using optical fibers. Hereafter, the client computer CL will be called a client CL, and the server computer SV1 will be called a server SV1.

The storage device 100 is a disk array system that controls a plurality of hard disks as one hard disk unit, and is logically structured by a plurality of volumes 110, 120, 130, 140, and 150 (hereafter called logical volumes 110, 120, 130, 140, and 150). The logical volume 110 stores system files that realize a file server function. The logical volume 120 stores the latest data file.

The server SV1 is a computer that provides a file server function which provides data files stored in the storage device 100 to the client CL. The file server environment is constructed using the system files stored in the logical volume 110 of the storage device 100, and the data files stored in the logical volume 120 are provided to the client CL.

The control server device 20 performs access to the server SV1 via the local area network LAN1, and at a specified timing, sends instructions to acquire a snapshot image of the storage device 100. A snapshot is a function of copying a volume or a file system stored in the storage device 100. A snapshot image represents the copied image using a snapshot.

The server SV1 receives instructions to acquire a snapshot image from the control server device 20, acquires the snapshot image of the logical volume 110, and stores this in the logical volume 130, while acquiring the snapshot image of the logical volume 120 and storing this in the logical volume 140. The server SV1 constructs a virtual file server environment using the snapshot image of system files stored in the logical volume 130. The virtual file server provides the data file snapshot image stored in the logical volume 140.

The server SV1 sets the host name of the file server that provides the data files stored in the logical volume 120 to "today's server," and sets the host name of the virtual file server that provides snapshot images as "yesterday's server." The reason this kind of name is used is that "today's server" provides the latest data files, and "yesterday's server" provides backup data using snapshot images for the previous day, so these names are for making this clear to the client CL users. When the user views snapshot images, the user uses the client CL, accesses the server SV1 via the local area network LAN2, and views a file server with the name "yesterday's server."

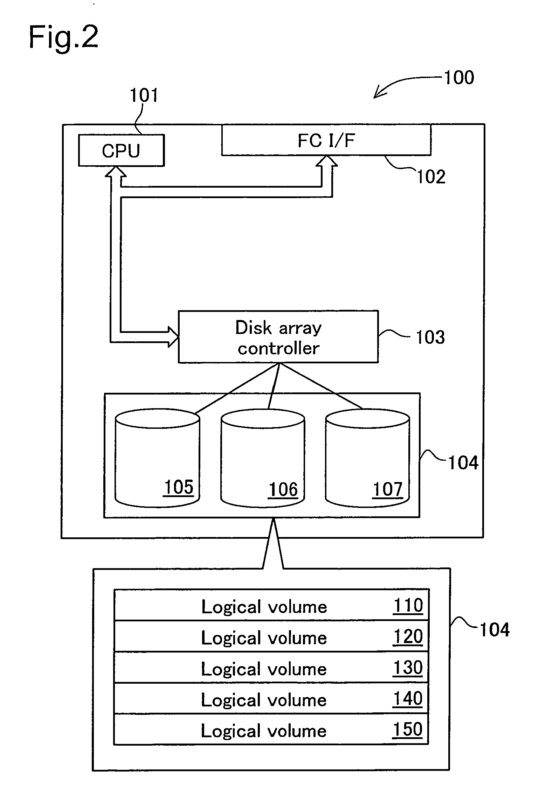

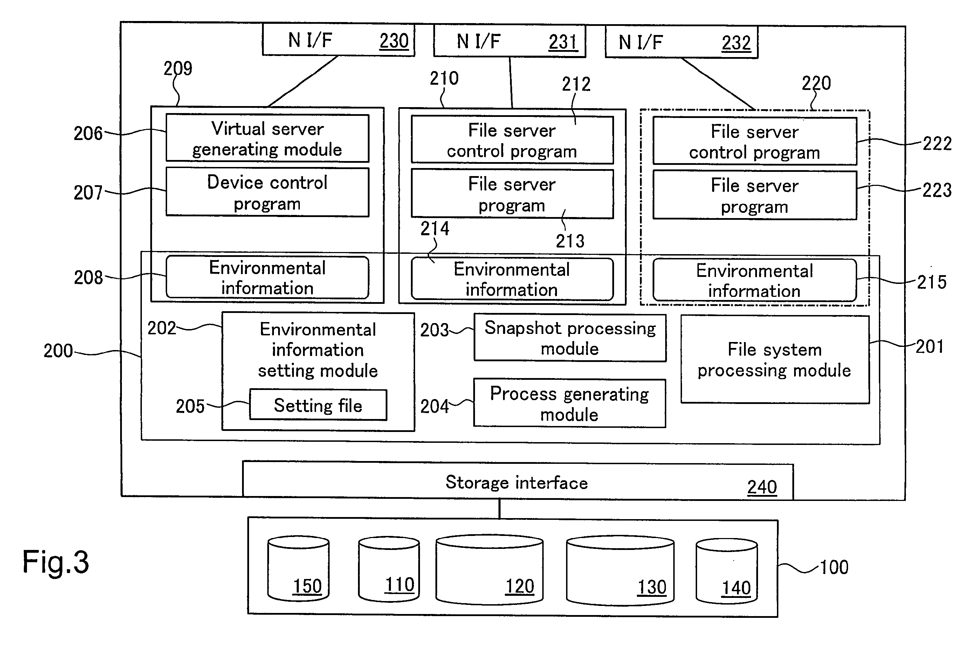

An example of the function block of the server SV1 is shown together with the figure. The server SV1 is constructed as a host computer comprising CPU 250, network interface 230, 231, and 232, storage interface 240, and memory 260. The network interfaces 230, 231, and 232 are so-called network device drivers. The network interface 230 is connected to the local area network LAN1. The network interfaces 231 and 232 perform communication with the local area network LAN2. The storage interface 240 performs communication with the storage device 100 via the storage network SAN. The server SV1 is controlled by the CPU 250. The detailed explanation of the structure of the storage device 100 will be explained with refereeing with figure 2, and will be explained the detailed structure of the main program of the server SV1 and of the OS refereeing with figure 3.

### A2. Function Block:

Figure 2 is an explanatory diagram that sows an example of the function block of the storage device 100 of this embodiment. The storage device 100 comprises CPU 101, interface 102, disk array controller 103, and disks 105, 106, and 107. The storage device 100 is controlled by the CPU 101.

The interface 102 is a fiber channel compatible interface, and uses optical fibers to communicate with server SV21.

The disk array controller 103 controls disks 105, 106, and 107. In specific terms, the disk array controller 103 consolidates the disks 105, 106, and 107 as a single unit hard disk 104, and logically constructs plurality of volumes 110, 120, 130, 140, and 150 (hereafter called logical volumes 110, 120, 130, 140, and 150). The data stored in each logical volume will be explained later.

Figure 3 is an explanatory diagram showing an example of the structure of the server SV1 for this embodiment. The server SV1 includes device control module 209, file server function module 210, and virtual file server function module 220. The device control module 209, the file server function module 210, and the virtual file server function module 220 are linked to the operating system 200, and perform sending and receiving of data with the control server device 20, the client CL, and the storage device 100.

Environmental information 208 is information that forms the operating environment of the device control module 209. Environmental information 214 is information that forms the operation environment of the file server function module 210, and environmental information 215 is information that forms the operating environment of the virtual file server function module 220. A detailed explanation of environmental information 214 and 215 will be explained later.

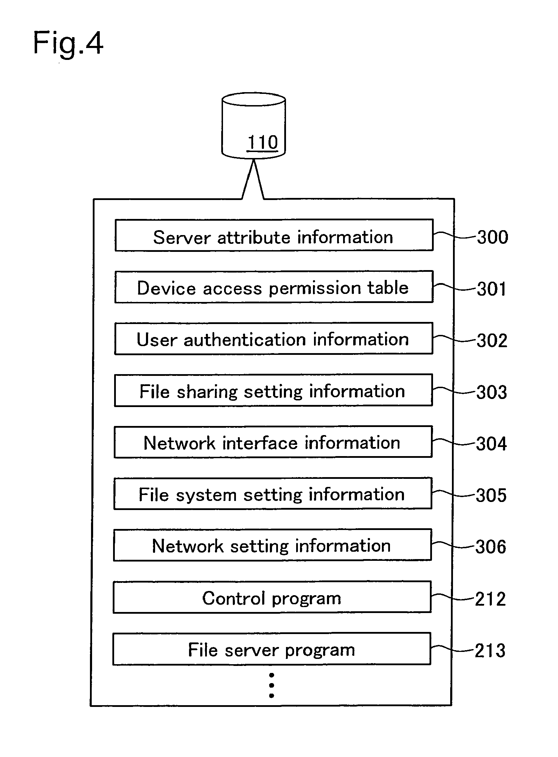

The logical volume 110 stores system files that forms the operating environment of the file server function module 210, and the logical volume 120 stores the latest data file. The logical volume 130 stores a snapshot image of the logical volume 110 at a specified point in time for the logical volume 110, and the logical volume 140 stores a snapshot image of the logical volume 120 at a specified point in time. The logical volume 150 stores system files that forms the device control module 209. An example of the system files stored in the logical volume 110 will be explained refereeing with figure 4.

Figure 4 is an explanatory diagram that shows an example of the contents of the logical volume 110 for this embodiment. As shown in the figure, the logical volume 110 stores server attribute information 300, device access permission table 310, user authentication information 302, file sharing setting information 303, network interface information 304, file system setting information 305, network setting information 306, a file server control program 212, and a file server program 213. The environmental information 214 is generated based on those informations.

Return to figure 3 and explanation will be continued. OS 200 operates on the server SV1, and provides an interface and file system to various types of application programs mounted on memory 260 of the server SV1. Also, the OS 200 comprises as function blocks file system processing module 201, environmental information setting module 202, snapshot processing module 203, and process generating module 204. Each function block is constructed as software.

The file system processing module 201 controls the storage position of the data files on each logical volume 110 to 150, and the file system processing module 201 performs provision of name space using a tree structure and stores data files using a tree structure.

The process generating module 204 generates a process based on requests from each application program. When an environmental information generating request is included in a request from each application program, the process generating module 204 references the system files stored in the storage device 100, and specifies the environmental information to the generated process.

The device control module 209 performs execution of the file server function module 210 as well as generation and execution of the virtual file server function module 220. The file server function module 210 comprises functions that receives a request to access a data file stored in the logical volume 120, performs write and read of the data file, and returns the results to the access request. The virtual file server function module 220 comprises functions that receives a request to access a snapshot image stored in the logical volume 140, reads the data file, and returns the results. The snapshot image stored in the logical volume 140 is to read-only.

The device control program 207 is an application program that operates as part of the device control module 209. The device control program 207 gives instructions to the process generating module 204 to generate a process that includes an environmental information generating request in order to activate the file server control program 212. Based on these instructions, the file server control program 212 is activated.

The file server control program 212 is an application program that operates as part of the file server function module 210. The file server control program 212 gives instructions to the process generating module 204 to generate a process that includes an environmental information generating request in order to activate the file server program 213. Based on these instructions, the file server program 213 is activated.

The file server program 213 is an application program that operates as part of the file server function module 210. The file server program 213 receives a request to access the data file stored in the storage device 100 via the local area network LAN2 from the client CL. Based on the access request, the file server program 213 uses the file system processing module 201 provided by the OS 200, performs write and read of the data file stored in the logical volume 120, and returns the results to the client CL. The server SV1 provides the file server function module 210 as a file server to the client CL, so hereafter, the file server function module 210 will be called a file server 210.

Based on the request for environmental information generation of the device control program 207 and the file server control program 212, the OS 200 uses the various types of information stored in the logical volume 110 and generates the environmental information 214. The file server 210 is formed using the environmental information 214. A detailed explanation of the environmental information 214 will be explained later.

The device control program 207 receives instructions to acquire a snapshot image from the control server device 20 via the local area network LAN1, and performs snapshot image acquisition instructions at the file server control program 212.

When snapshot image acquisition instructions are received, the file server control program 212 also gives instructions for acquiring a snapshot image of the logical volume 110 and the logical volume 120 to the snapshot processing module 203 of the OS 200.

Based on snapshot acquisition instructions from the file server control program 212, the snapshot processing module 203 acquires snapshot images of the system files stored in the logical volume 110. The snapshot processing module 203 stores the acquired snapshot images in the logical volume 130. Also, the snapshot processing module 203 acquires snapshot images of data files stored in the logical volume 120 and stores them in the logical volume 140.

After acquiring snapshot images, the device control program 207 gives instructions to the environmental information setting module 202 to change the settings of system files of the snapshot image in the logical volume 130.

The setting file 205 is a file with which information for changing settings of the system files of the snapshot images stored in the logical volume 130 is set. The environmental information setting module 202 references the setting file 205 and changes the settings of the system files of the snapshot image. Details of setting file 205 will be described later.

The device control program 207, after changing the system files of the snapshot image, which are stored in the logical volume 130, gives instructions to the process generating module 204 to generate a process that includes an environmental information generating request in order to activate a virtual file server control program 222.

The virtual file server control program 222 is an application program that operates as part of the virtual file server function module 220. The virtual file server control program 222 makes settings in order to operate the virtual file server program 223. In specific terms, the virtual file server control program 222 gives instructions to process the generating module 204 to generate a process that includes an environmental information generating request in order to activate the virtual file server program 223. The virtual file server program 223 is activated according to the concerned instructions.

The virtual file server program 223 is an application program that operates as part of the virtual file server function module 220. The virtual file server program 223 receives a request to access the data file snapshot image from the client CL. via the local area network LAN2. Based on the access request, the file server program 213 uses the file system processing module 201 provided by the operating system 200, performs reading of the data files stored in the logical volume 140, and returns the results to the client CL. The server SV1 provides the virtual file server function module 220 to the client CL as a virtual file server, so hereafter, the virtual file serer function module 220 is called the virtual file server 220.

Based on the environmental information generation request of the device control program 207 and the virtual file server control program 222, the OS 200 uses various information stored in the logical volume 130 and generates the environmental information 215. The virtual file server 220 is constructed using the environmental information 215. The details of environmental information 215 will be described later.

### A3. Virtual Server Generating Process:

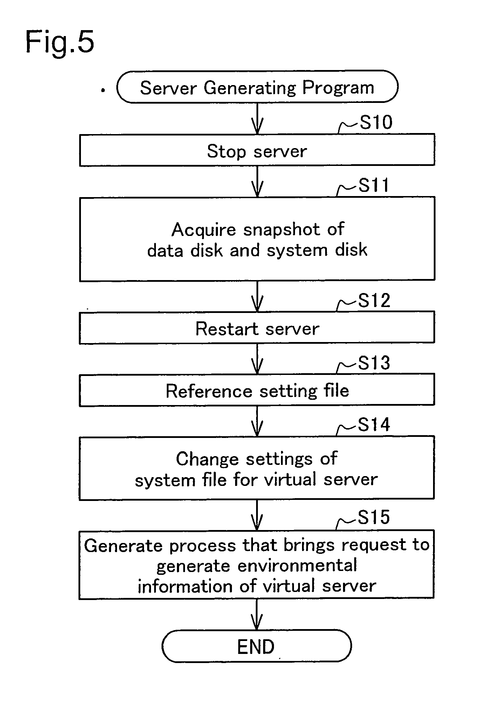

Figure 5 is a flow chart that explains the virtual file server generating process of this embodiment. The server SV1 is a process that is executed based on the virtual file server generating instructions from the control server device 20. File server 210 is executed together with activation of the server SV1.

When virtual file server generating instructions are received from the control server device 20, the server SV1 temporarily stops file server 210 (step S10), acquires a snapshot image of the system data stored in the logical volume 110 and stores this in the logical volume 130 while the server SV1 also acquires a snapshot image of data files stored in the logical volume 120 and stores the a snapshot image in the logical volume 140 (step S11). After acquiring the snapshot images, the server SV1 restarts the stopped the file server 210 (step S20). The reason that the file server 210 is temporarily stopped is because it is not possible to acquire a snapshot of the system files stored in the logical volume 110 while the file server 210 is operating.

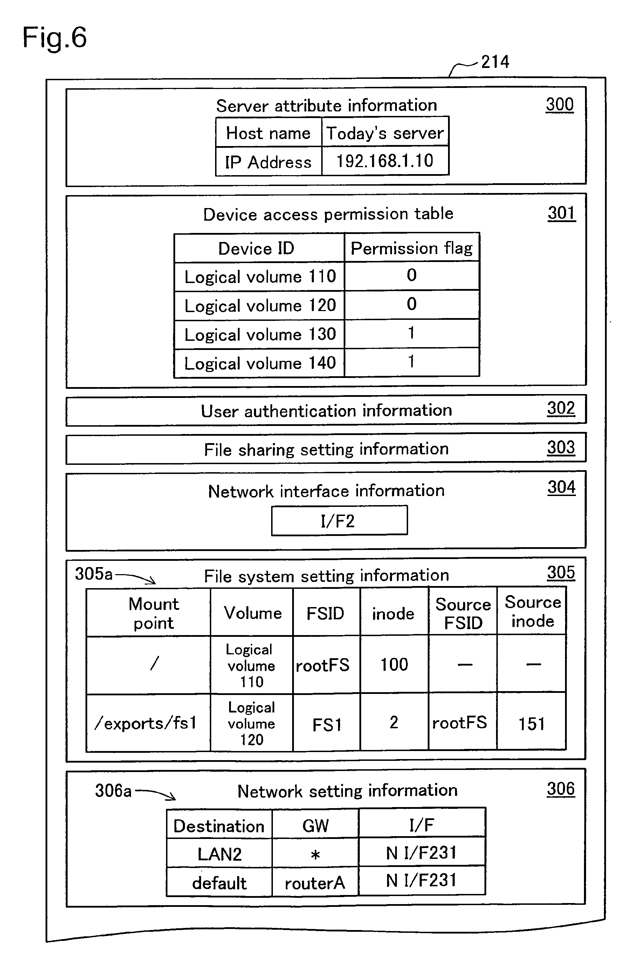

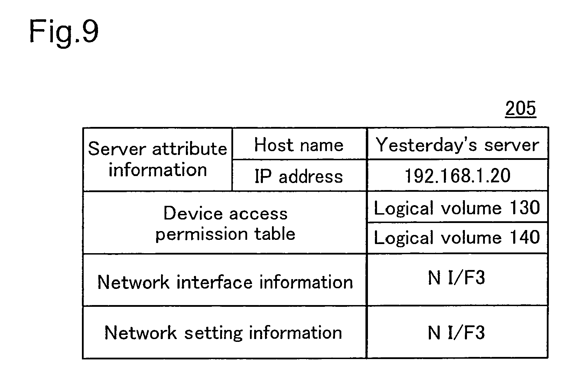

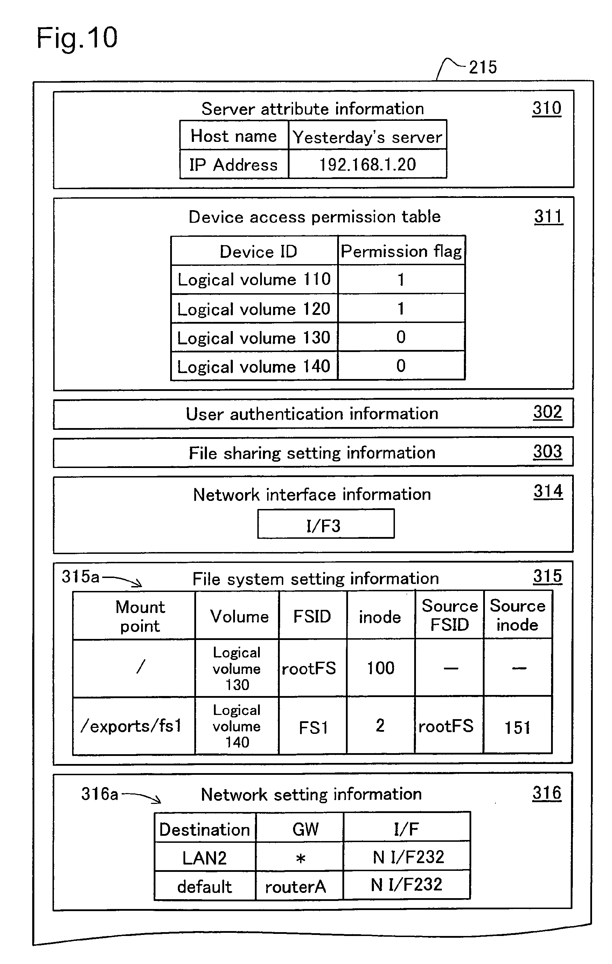

The server SV1 references setting file 205 (step S13), acquires a snapshot and changes the system files of virtual file server 220 that is stored in the logical volume 130 (step S14). The server SV1 gives instructions to the process generating module 204 that bring up an environmental information 215 generating request for the virtual file server 220, and the process generating module 204 generates a process and executes the virtual file server 220 (step S15). Following, the details of environmental information 214 will be described refereeing with figures 6 through 8, and will explain the contents of setting file 205 using figure 9. The environmental information 215 generated by the system files that is changed based on setting file 205 using figure 10 also will be explained.

Figure 6 shows the environmental information 214 of the file server 210 for this embodiment. The environmental information 214 is specified by the process generating module 204 based on the system files stored in the logical volume 110. As shown in the figure, the environmental information 214 is composed from a variety of setting information including server attribute information 300, device access permission tables, user authentication information 302, file sharing setting information 303, network interface information 304, file system setting information 305, and network setting information 306.

The server attribute information 300 is information that shows the attributes of the file server executed by the file server program 213, and is information composed from the file server host name and IP address. With this embodiment, the host name of the file server executed by the file server program 213 is "Today's Server," and the IP address is "192.168.1.10".

The device access permission table 301 is a table that shows the logical volumes for which access is possible by a file server executed by the file server program 213. As shown in the figure, the device access permission table 301 is a table composed from the "device ID" and "permission flag." Access is possible for the logical volumes for which the "permission flag" is "0," and access is not possible for the logical volumes for which the "permission flag" is "1." With this embodiment, for the logical volume 110 and the logical volume 120, the permission flag is set to "0," and access is possible, and with the logical volume 130 and the logical volume 140, the permission flag is set to "1" and access is not possible.

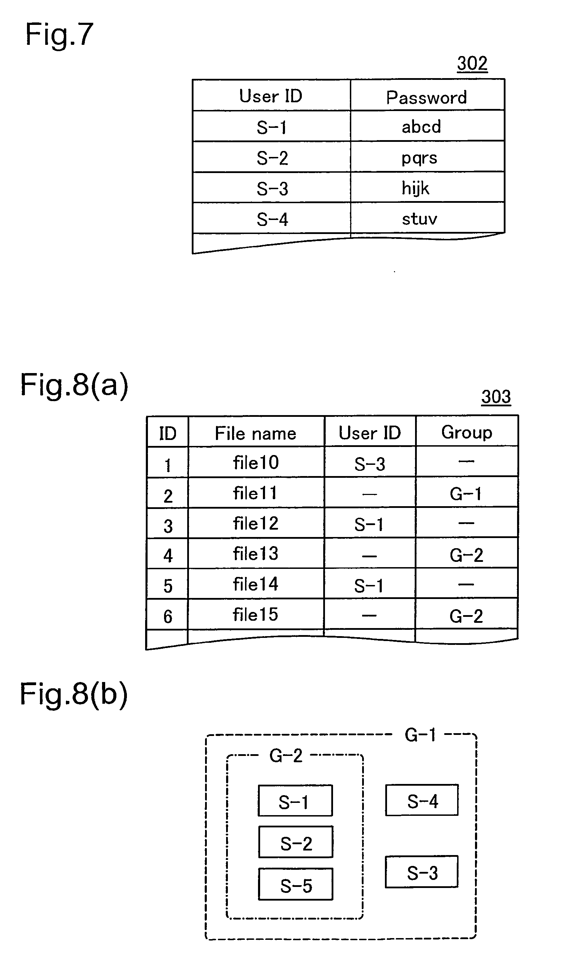

The details of the user authentication information 302 and the file sharing setting information 303 will be explained referring with figures 7 and 8 respectively

Figure 7 is an explanatory diagram that shows an example of the authentication information 302 for this embodiment. The authentication information 302 is composed from two items, the user ID and the password. With this embodiment, when a user with the user ID "S-1" accesses the server SV1, for example, access is allowed when the password is "abcd".

Figure 8 is an explanatory diagram that shows an example of the file sharing setting information 303 for this embodiment. The file sharing setting information 303 is composed from the "ID" allocated individually to each file sharing information, the "file name" that shows the file name, the "user ID" that shows the control user ID, the "user ID" that shows the control user ID, the "group" that shows the group capable of access, and the "access" that shows access authorization. Included in group "G-1" shown by the dotted line are users with the user IDs "S-1," "S-2" "S-3," "S-4," and "S-5." Furthermore, group "G-2" shown by the dot-dash line is part of "G-1," and included in this are users "S-1," "S-2," and "S-5." Users "S-1," "S-2," and "S-5" belong to both groups "G-1" and "G-2."

With this embodiment, for example the file name "file 10" of ID "1" shows that access is possible by user "S-3." Also, as shown by ID "2," file name "file 11" is shared by users belonging to group "G-1," and access is possible by users belonging to group "G-1."

Returning to figure 6 and explanation will be continued. The network interface information 304 is information that sets the network interface that should be used when performing communication between the file server program 213 and another device. With this embodiment, for the network interface information 304, the network interface 231 is set.

The file system setting information 305 stores mount table 305a that defines the name space used by the environmental information 214. The mount table 305a is composed from the six items of a "mount point," "volume," "FSID," "inode," "source FSID," and "source inode." The "mount point" is information that shows the location where resources are mounted, and the "volume" is information that shows on which volume a file system was created. Also, "FSID" is the ID given individually to each file system, and "inode" is the number given individually to each file. The "source FSID" is information that shows the file system ID of the source to which the directory belonged before mounting, and the "source inode" is the inode number that shows the directory before mounting.

As shown in the figure, the mount point of the file system for which the file system ID is "rootFS" is "/", and this shows the route directory for the environmental information 214. The inode number of the root directory "/" of the file system called "rootFS" is "100". Stored in "source FSID" and "source inode" is "―" which shows that there is no source file system ID or source inode number. "The logical volume 110" is set in "volume," showing that file system "rootFS" is a file system created on the logical volume 110.

Also, as shown in the figure, file system "FS1" is a file system created on the logical volume 120, and the file system "FS1" inode number "2" directory shows that this is the file system "FS1" root directory. The file system "FS1" mount point is "/exports/fs1", and this shows that files system "FS1" is mounted, in other words connected, to the directory called "/exports/fs1". Also, from the fact that source FSID is set as "rootFS" and source node is set as "151," it is shown that the "/exports/fs1" directory was a directory of file system "rootFS" inode number "151" before mounting.

In this embodiment, only information showing the mount point is stored in the file system setting information 305, and information that shows tree structure name space is not stored. Information that shows a tree structure name space is formed in each logical volume, and based on the tree structure name space formed in each logical volume as well as on the file system setting information 305, the server SV1 searches for the file path. By doing this, the server SV1 is able to reduce the information controlled by the server SV1 because it is possible to the control only mount table 305a.

Routing table 306a is stored by the network setting information 306. The routing table 306a is formed from three items, "destination," "GW," and "I/F." "Destination" shows where the data is going. "GW" is a gateway used when sending data to a destination that does not exist in the same local area network, and when "*" is set, this shows that the gateway is not used, and when something other than "*" is set, this shows that data is sent to the set gateway. "I/F" shows the network interface used by file server 210.

With this embodiment, when, for example, the file server 210 sends data to a host on the local area network LAN2, the file server 210 sends directly to the host on the local area network LAN2 using the network interface 231, without using a gateway. The "default" set in "destination" shows when data is sent to a host on a network other than the local area network LAN2 to which the file server 210 is connected, and data is sent to "router A" which is set as a gateway using the network interface 231.

It is also possible to store in the network setting information 306 not just the routing table 306a, but also a protocol table in which the protocol used when receiving data is set.

Figure 9 is an explanatory diagram that shows an example of a setting file 205 for this embodiment. The setting file 205 is composed from four items, the "server attribute information," "device access permission table," "network I/F information," and "network setting information."

As shown in the figure, the "server attribute information" is formed from two items, the "host name" and the "IP address." The "host name" is information that sets the name of virtual file server 220. The "IP address" is information that sets the IP address of virtual file server 220. With this embodiment, the "host name" is "Yesterday's Server," and the "IP address" is set as "192.168.1.20".

The "device access permission information" is information that sets the logical volume for which access is possible for the virtual file server 220. As shown in the figure, "the logical volume 130" and "the logical volume 140" are set in the "device access permission information," and this shows that access is allowed for virtual file server 220 to "the logical volume 130" and "the logical volume 140."

The "network I/F information" is information that sets the network interface used by the virtual file server 220. Also, the "network setting information" is information for setting a network interface for the routing table of environmental information 215 of the virtual file server 220. As shown in the figure, the virtual file server 220 sets the fact that the network interface 232 should be used. The environmental information setting module 202 uses the setting file 205 and changes the settings in the system files of the virtual file server 220.

Figure 10 is an explanatory diagram that shows an example of the environmental information 215 of the virtual file server 220 for this embodiment. The environmental information 215 is specified by process generating module 204 based on the system files stored in the logical volume 130. As shown in the figure, the environmental information 215 is composed from various setting information including server attribute information 310, device access permission table 311, user authentication information 312, file sharing setting information 313, network interface information 314, file system setting information 315, and network setting information 316. The structure of the environmental information 215 is the same as that of the environmental information 214. The server attribute information 310, the device access permission table 311, the network interface information 314, the file system setting information 315, and the network setting information 316 are changed by the environmental information setting module 202 based on information set in the setting file 205.

In the figure, as set in the server attribute information 310, the host name of the file server executed by virtual file server program 223 is "Yesterday's Server," and the IP address is "192.168.1.20".

In the figure, as set in the device access permission table 311, the permission flag is set to "1" for the logical volume 110 and the logical volume 120, and the permission flag is set to "0" for the logical volume 130 and the logical volume 140. Specifically, the file server executed by the virtual file server program 223 may access the logical volume 130 and the logical volume 140.

The user authentication information 312 and file sharing setting information 313 have the same contents as the user authentication information 302 and the file sharing setting information 303 at the point that the snapshot image was acquired. Specifically, these are the same as user authentication information 302 of figure 7 and file sharing setting information 303 of figure 8.

The mount table 315a of the file system setting information 315 has the same structure as the mount table 305a of the environmental information 214, but the volume for which the file system is created is different. The snapshot image of the logical volume 110 is stored in the logical volume 130, so file system "rootFS" is generated on the logical volume 130. The snapshot image of the logical volume 120 is stored in the logical volume 140, so file system "FS1" is generated on the logical volume 140.

The network setting information 316 stores the routing table 316a. As shown in routing table 316a, "network interface 232" is set in "I/F." Specifically, this shows that the virtual file server that operates for the virtual file server 220 should use the network interface 232 when sending data.

### A4. Screen Example:

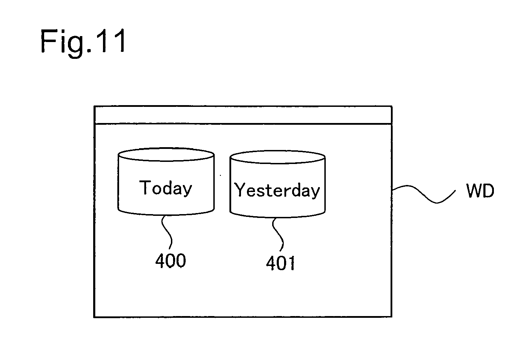

Figure 11 is an explanatory diagram of an example of a screen of the client CL for this embodiment. When the client CL accesses the server SV1 via the local area network LAN2, the window WD shown in figure 11 (a) is displayed in the display of the client CL. Displayed in window WD are today's server 400 and yesterday's server 401. "Today's server" is the host name of file server 210 as set in environmental information 214. Specifically, today's server 400 shows the file server 210. Similarly, "Yesterday's server" is the host name of the virtual file server 220 as set in the environmental information 215, and shows the virtual file server 220 that provides a snapshot image.

With the computer system 1000 of the first embodiment explained above, snapshot images are stored in the logical volume formed by logic on the storage device, and this forms a virtual file server to provide snapshot images, so it is possible to have the user view backup files using snapshot images without an increase in physical hard disks.

Also, for system files as well, as with data files, these are acquired as snapshot images, so it is possible to easily construct a virtual file server. File system setting information within system files is also acquired as a snapshot image, so the file server and virtual file server use the same file system. Therefore, it is possible to access files stored in a specified position of the virtual file server using the same path structure as the file server.

Also, with this embodiment, by setting easy to understand host names with "Today's server" as the name of the file server that provides the latest data files and "Yesterday's server" as the name of the virtual file server, users can access snapshot images easily.

Access control information such as the user authentication information and file sharing setting information. is also acquired as a snapshot image, so it is possible to obtain the access control state at the point the snapshot image was acquired, and to ensure security.

With this embodiment, the setting file 205 is stored in the OS 200 in advance, but it is also possible to suitably construct the environmental information 215 by having the administrator input the information set in the setting file 205 when constructing the virtual file server.

### B. Second Embodiment:

With the first embodiment, the server SV1 and the storage device 100 are connected, and snapshot processing is performed by the server SV1 to control the storage device 100. With the second embodiment, in place of the storage device 100, a storage device 600 which has a function of acquiring snapshot images is connected to a server SV2, and then computer system 2000 is established.

With this embodiment, the server SV2 has approximately the same structure as the server SV1. Differences from the SV1 are that the server SV2 is not equipped with a snapshot processing module 203, and the device control program 207 of the server SV2 gives instructions to the storage device 600 to acquire snapshot images. Also, with the first embodiment, a snapshot image of the system files of the file server 210 stored in the logical volume 110 is acquired and this is used as the system files of the virtual file server 220, but with the second embodiment, the system files of the virtual file server is installed separately.

### B1. System Configuration:

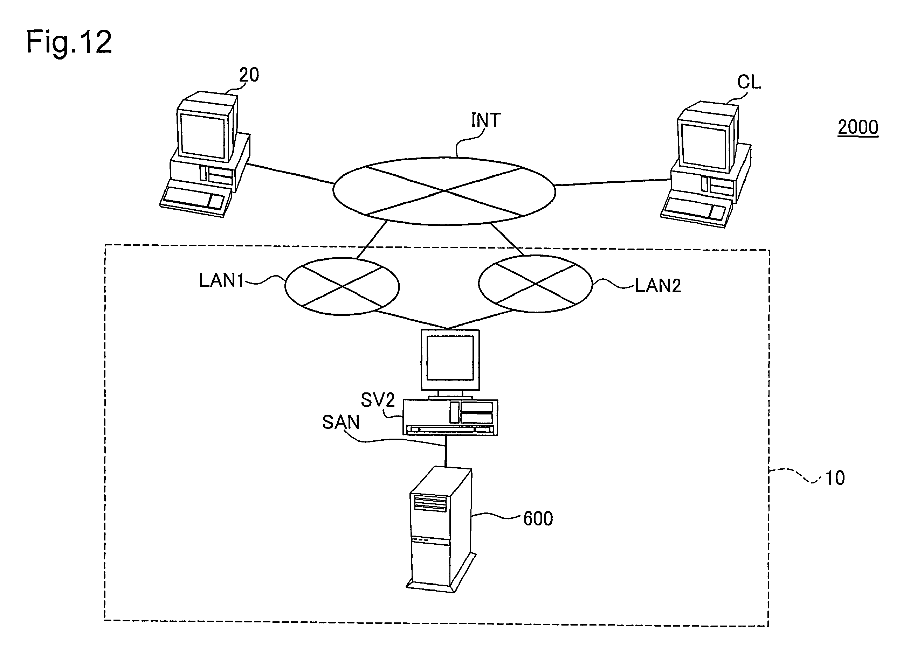

Figure 12 is an explanatory diagram that shows an example of the computer system 2000 of this embodiment. This has approximately the same structure as the computer system 1000 of the first embodiment. Instead of the storage device 100 in the first embodiment, server SV2 and a storage device 600 are connected.

The server SV2 receives instructions to acquire snapshot images from the control server device 20, and gives instructions to the storage device 600 to acquire snapshot images. The storage device 600 acquires snapshot images of the data file stored in the storage device 600 based on instructions to acquire snapshot images. The server SV2 provides a snapshot image of the storage device 600 to the client CL.

### B2. Function Block:

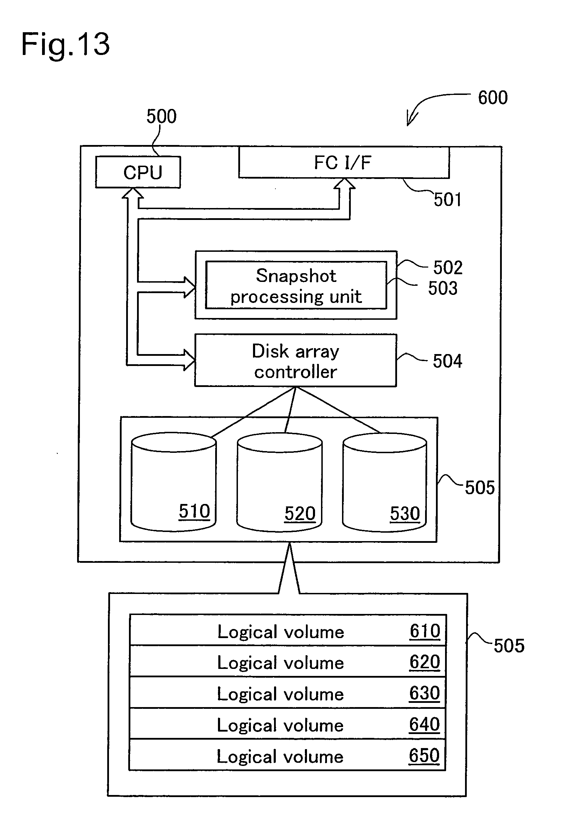

Figure 13 is an explanatory diagram that shows an example of a function block of the storage device 600 for this embodiment. The storage device 600 comprises CPU 500, interface 501, memory 502, disk array controller 504, and disks 510, 520, and 530. The storage device 600 is controlled by the CPU 500.

The interface 501 is a fiber channel compatible interface, and uses optical fibers to communicate with the server SV2.

The disk array controller 504 controls disks 510, 520, and 530. In specific terms, the disks 510, 520, and 530 are consolidated and controlled as a single unit hard disk 505, and in terms of logic, it forms a plurality of volumes 610, 620, 630, 640, and 650 (hereafter called the logical volumes 610, 620, 630, 640, and 650). Files stored in the logical volume 610 correspond to files stored in the logical volume 110 in the first embodiment. Similarly, files stored in the logical volume 620 correlate to files stored in the logical volume 120 in the first embodiment, files stored in the logical volume 630 correlate to files stored in the logical volume 130 in the first embodiment, and files stored in the logical volume 640 correlate to files stored in the logical volume 140 in the first embodiment. Files stored in the logical volume 650 are the file stored in the logical volume 150 in the first embodiment and installation files that install the virtual file server system files.

The snapshot processing module 503 operates on the memory 502. The snapshot processing module 503 acquires snapshot images of the data files stored in the logical volume 620 based on instructions to acquire a snapshot from the server SV2, and stores these in the logical volume 640.

The device control program 207 of the server SV2 gives instructions to the storage device 600 to acquire snapshot images, after which it installs the system files of the virtual file server stored in the logical volume 650 into the logical volume 630. Then, the server SV2 copies environmental information such as the user authentication information from the logical volume 610 and stores environmental information in the logical volume 630, makes changes to environmental information using the setting file 205, and starts providing snapshot images using the virtual file server.

### B3. Virtual Server Generating Process:

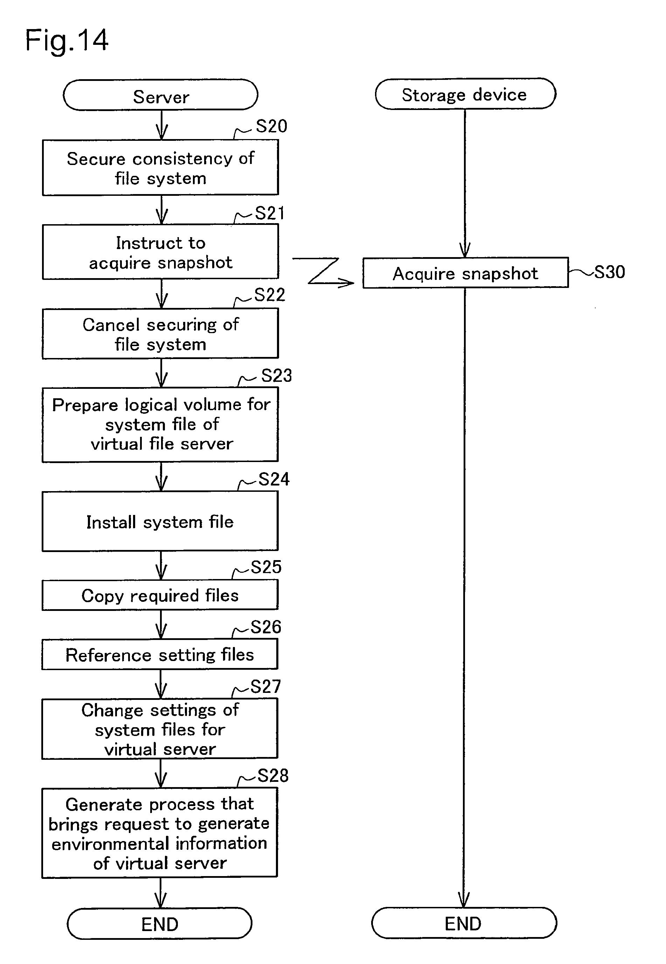

Figure 14 is a flow chart that explains the virtual server generating process of this embodiment.

The server SV2 performs the process of securing consistency of the file system (step S20), and gives instructions to the storage device 600 to acquire snapshot images of the logical volume 620 in which data files are stored (step S21). Securing consistency of the file system is a process of, of the data to be written to the storage device 600 by the server SV2, writing to the storage device 600 the data that is stored in memory on the server SV2 but has not yet been written to the storage device 600, and after that, putting a hold on writing to the storage device 600.

Next, the storage device 600 acquires snapshot images of data files stored in the logical volume 620, and stores these in the logical volume 640 (step S30).

When the process of acquiring snapshot images of the storage device 600 ends, the server SV2 cancels the securing of consistency of the file system, and starts write processing of data to the storage device 600 (step S22). Next, the server SV2 prepares the logical volume 630 that installs the virtual file server system files (step S23), and using an installer, installs the virtual file server system files to the logical volume 630 (step S24).

Next, the server SV2 copies the environmental information stored in the logical volume 610 into the logical volume 630 (step S25). The server SV2 references the setting file (step S26) and changes the location which should be changed of the copied environmental information (step S27). The server SV2 gives instructions to the process generating module 204 that brings a request to generate the virtual file server environmental information, and the process generating module 204 generates a process and executes the virtual file server 220 (step S28).

With the computer system of the second embodiment explained above, the storage device 600 is equipped with a function of acquiring snapshot images, so it is possible to reduce the processing load of the server SV2. Also, in parallel with the snapshot image acquisition process, it is possible to install virtual file server system files, and thus the processing efficiency of the server SV2 may be improved.

### C. Modifications:

Although various embodiments of the present invention are explained the above, the present invention is not limited to those embodiments, and it is obvious that it is possible to use various structures without straying from the scope of the invention. For example, structures such as the following can be used.

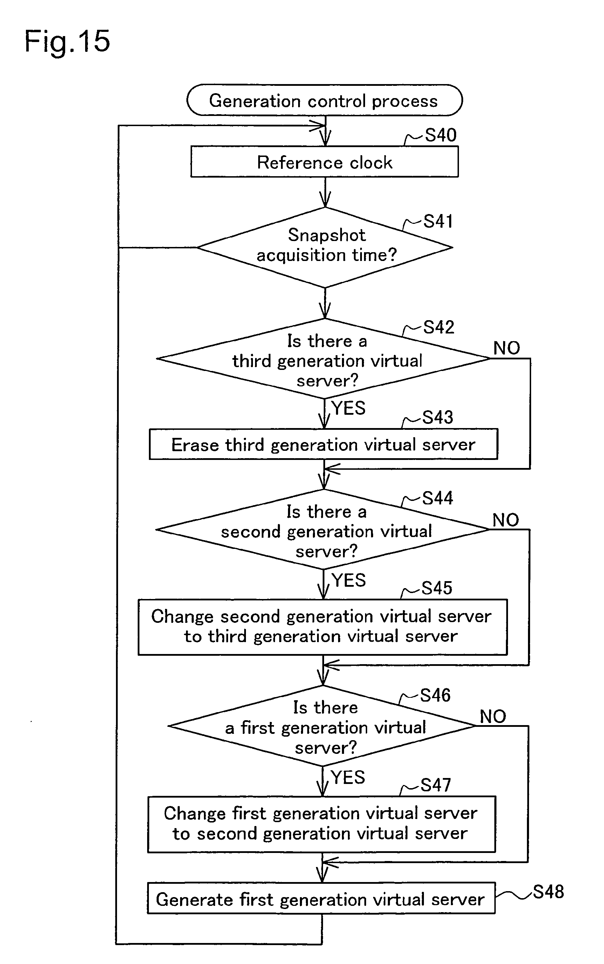

(1). In the first embodiment and second embodiment, a single virtual file server is activated, but the invention is not limited to those embodiments. It is also possible to activate a plurality of virtual file servers. With this variation example, of the plurality of activated virtual file servers, the newest virtual file server is called the first generation virtual file server, and thereafter, in order of newness, they are called second generation and third generation. With this variation example, snapshot images are acquired once per day. The host name of the first generation virtual file server is called the "one day ago server," the host name of the second generation virtual file server is called the "two days ago server," and the host name of the third generation virtual file server is called the "three days ago server." With this variation, we generated virtual file servers up to the third generation. We will use figure 15 to explain the server SV1 processing when constructing a new virtual file server in a case when a plurality of virtual file servers are activated.

Figure 15 is a flow chart that explains the generation control process of this variation example. The server SV1 references the built in clock (step S40), and decides whether it is the snapshot image acquisition time (step S41). When it is the snapshot image acquisition time (step S41: Yes), the server SV1 decides whether there is a third generation virtual file server (step S42). When there is the third generation virtual file server (step S42: Yes), the server SV1 erases the third generation virtual file server (step S43). When there is no third generation virtual file server (step S42: No), processing continues from step S44.

Next, the server SV1 decides whether there is a second generation virtual file server (step S44). When there is the second generation virtual file server (step S44: Yes), the server SV1 changes the second generation virtual file server to the third generation virtual file server (step S45). In specific terms, the host name of the second generation virtual file server is changed from "yesterday's server" to "three days ago server." When there is no second virtual file server (step S44: No), processing continues from step S46.

The server SV1 decides whether there is a first generation virtual file server (step S46). When there is the first generation virtual file server (step S46: Yes), the server SV1 changes the first generation virtual file server to the second generation virtual file server (step S47), and generates a first generation virtual server (step S48). When there is no first generation virtual file server (step S46: No), the server SV1 performs the processing of step S48.

In accordance this modification, it is possible to construct a virtual file server over a plurality of generations, and using an easy to understand host name, to control virtual file servers in time series. The host name of the virtual file server can be a date, for example, and when there are multiple generations done in one day, it is also possible to reflect the generating time in the host name. It is preferable to use host names that are easy for the user to understand.

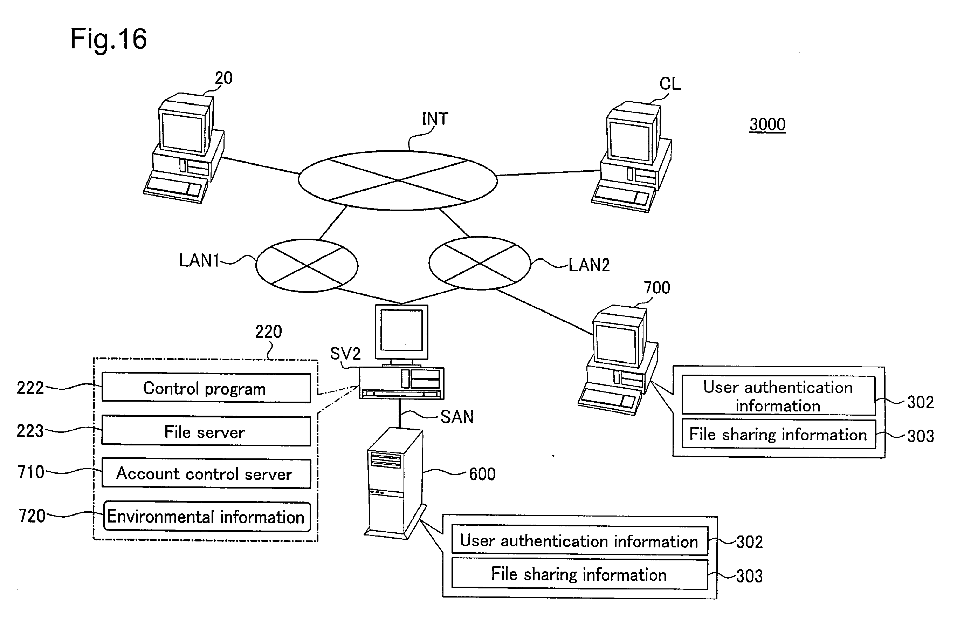

(2). In the second embodiment explained above, the server SV2 performs access control such as user authentication, but the invention is not limited to this. For example, it is also possible to equip the computer system 2000 with an account control server that performs access control. A computer system 3000 that is equipped with an account control server will be described referring with figure 16.

Figure 16 is an explanatory diagram that shows an example of the system structure of the computer system 3000 in the variation example. This system has an account control server 700 added to the system configuration of the second embodiment.

The Account control server 700 is connected to the local area network LAN2. The account control server 700 decides whether access is possible to data files stored in the logical volume 620 that is formed in the storage device 600, and performs access control. In specific terms, The account control server 700 decides whether access is possible or not in the following manner.

When a request to access file server 210 is received from a user using the client CL, the server SV1 inquires whether access is possible to account control server 700. The account control server 700 is equipped with user authentication information 302 or file sharing setting information 303, and based on the user ID or the file sharing state for which access is desired, a decision is made of whether access is possible, and notification is given to the server SV2. The server SV2 controls access from the client CL based on the access possibility information notified from the account control server 700.

The user authentication information 302 and file sharing setting information 303 that the account control server 700 is equipped with may always be changed by the administrator. However, when the virtual file server 220 is activated for server SV2, if the user authentication information 302 or file sharing setting information 303 at the point that the snapshot image is acquired is not maintained, then it is not possible to properly control access to snapshot images. Because of this, with this modification, an account control server 710 is constructed in the virtual file server 220 that provides the snapshot images. The server SV2 gives instructions to acquire snapshot images, and when the server SV2 constructs a virtual file server 220, the server SV2 acquires a program that activates the account control server and stores this in the logical volume 630, and also acquires from the account control server 700 the user authentication information 302 or file sharing setting information 303 at the time of instructions to acquire snapshot images and stores these in the logical volume 630. The server SV2 activates the account control server 700.

When there is a request to access snapshot images via the virtual file server 220, the server SV2 decides whether access is possible using the account control server 710 of the virtual file server 220, and performs access control.

In accordance with this modification, even when there is an account control server that controls accounts, it is possible to maintain the security at the point that snapshot images are acquired.

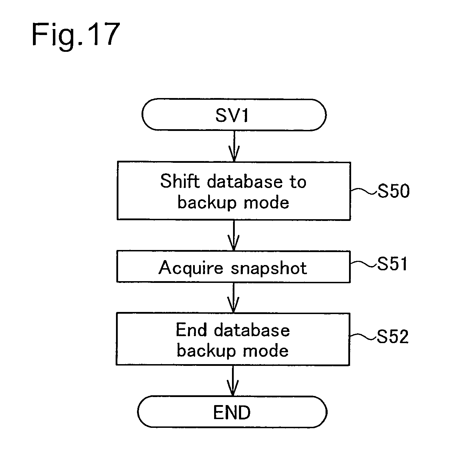

(3). In the first embodiment, the system files and data files are stored in the storage device 100 that is formed as a disk array, but in place of the storage device 100, it is also possible to connect a database server to the server SV1, and to store system files and data files in the database server. When connecting a database server to the server SV1, in cases when acquiring snapshot images and constructing virtual file server 220, it is also possible to realize this by performing the processes shown in figure 17 instead of steps S10 through S12 in figure 5.

Figure 17 is a flow chart that explains the snapshot acquisition process for the variation example. When the server SV1 receives instructions to generate a virtual file server from the control server device 20, the database shifts to the backup mode (step S50). The backup mode is the state of stopping write processing to the database in order to match the data in the database.

The server SV1 next acquires snapshots and stores them in a specified storage area (step S51), and ends the database backup mode (step S52). The server SV1 performs the processing from after step S13 of figure 5.

In accordance with this modification, even when controlling data files using a database instead of the storage device 100 or a storage device, it is possible to easily acquire snapshot images and to generate a virtual file server.

(4). In the first embodiment and second embodiment described above, the storage devices 100 and 600 as well as the server SV1 and SV2 are constructed individually, but it is also possible to have an NAS (Network Attached Storage) formed within the same housing.

## Claims

1. A computer system (1000) comprising a storage device (100) that stores information resources and an information resource control device connected to said storage device (100);
wherein said storage device (100) comprises:
a storage unit that has an information resource storage area (110, 120) and a snapshot image storage area (130, 140), wherein the information resource storage area (110, 120) stores said information resources, and wherein the snapshot storage area (130, 140) stores a snapshot image that shows an image of said information resources at a specified point in time; and
said information resource control device comprises:
a first provision module (210) that provides said information resources stored in said information resource storage area (110, 120) of said storage device (100);
a snapshot processing module (203) that acquires a snapshot image of said information resource storage area (110, 120), and stores said acquired snapshot image in said snapshot image storage area (130, 140) of said storage device (100);
a generating module (209) that generates a second provision module (220) that provides said snapshot image that is stored in said snapshot image storage unit (130, 140) of said storage device (100); and
a start processing module that starts provision of said snapshot image.

2. A computer system (1000) in accordance with claim 1, wherein
environmental information resources and provision information resources are stored in said information resource storage area (110, 120), wherein the environmental information resources set the environment of said first provision module (210), and
wherein the provision information resources are provided by said first provision module (210),
said snapshot processing module (203) acquires a snapshot image of said environmental information resources and said provision information resources, and
said generating module (209) generates a second provision module (220) based on said acquired snapshot image.

3. A computer system (1000) in accordance with claim 1, wherein
first environmental information resources and provision information resources are stored in said information resource storage area (110, 120), wherein the first environmental information resources set the environment of said first provision module (210), and wherein the provision information resources provided by said first provision module (210),
said snapshot processing module (203) acquires a snapshot image of said provision information resources,
said information resource control device further includes an incorporating module that incorporates second environmental information resources that set the environment of said second provision module (220), and
said generating module (209) generates said second provision module (220) based on said incorporated second environmental information resources and the snapshot image of said acquired provision information resources.

4. A computer system (1000) of at least one of claims 1 to 3, wherein
said snapshot image has the same path structure as the path structure at the point when said snapshot image of said information resources stored in said information resource storage area (110, 120) of said storage device (100) is acquired.

5. A computer system (1000) of at least one of claims 1 to 4, wherein
attribute information that shows the attributes of said storage device (100) is contained in said information resources,
said information resource control device further includes a setting information storage unit (202) that stores setting information that records the attributes to be set in said second provision module (220), and
an attribute information setting module that sets attribute information of said second provision module (220) based on said setting information.

6. A computer system (1000) of claim 5, wherein said setting information is information that contains the IP address of said second provision module (220) as said attribute.

7. A computer system (1000) of claim 5, wherein said setting information includes the name of said second provision module (220) as said attribute.

8. A computer system (1000) of at least one of claims 1 to 7, wherein
said first provision module (210) controls access to said information resources that are stored in said information resource storage area (110, 120) based on access control information, wherein the access control information controls access to said storage device (100) and is stored in said information resource storage area (110, 120) of said storage device (100), and
said snapshot processing module (203) stores in said snapshot image storage area (130, 140) said access control information at the point that said snapshot image of said storage device (100) was acquired.

9. A computer system (1000) of claim 8, wherein
said access control information contains user authentication information that is used to authenticate users who access said storage device (100).

10. A computer system (1000) of claim 8 or 9, wherein
said access control information contains shared information that specifies the shared status of said information resources that are stored in said information resource storage area (110, 120) of said storage device (100).

11. A computer system (1000) of at least one of claims 1 to 10, wherein
the name of said second provision module (220) is a name that shows the relative time in relation to the point at which said snapshot image was acquired.

12. A computer system (1000) of claim 11, wherein
said information resource control device further comprises:
a decision module that decides whether an activated second provision module (220) exists before generating said second provision module (220), and
a change processing module that changes the name of said already activated second provision module (220), when the decision of said decision module decides that said activated second provision module (220) is existing.

13. An information resource control device that is connected to a storage device (100) that stores information resources and that controls said storage device (100), said information resource control device comprising:
a first provision module (210) that provides said information resources stored in said storage device (100);
a snapshot image acquiring module (203) that acquires a snapshot image,
wherein the snapshot image shows an image of said information resources that are stored in said storage device (100) at a specified point in time;
a generating module (209) that generates a second provision module (220), wherein the second provision module (220) provides said acquired snapshot image; and
a start processing module that starts provision of said snapshot image.

14. A storage device (100) that stores information resources, said storage device (100) comprising:
a storage unit that has an information resource storage area (110, 120) storing said information resources and a snapshot image storage area (130, 140) storing snapshot images that show images of said information resources at a specified point in time;
an instruction receiving module that receives instructions for getting said information resource snapshot images from a control device (100), wherein the control device controls said information resources being stored in said storage device (100); and
a snapshot processing module (203) that acquires a snapshot image of said information resources and stores the acquired snapshot image in said snapshot image storage unit (130, 140) based on said instructions.

15. A computer system (1000) comprising:
the storage device (100) of claim 14;
a first provision module (210) that provides said information resources stored in said information resource storage unit (110, 120) of said storage device (100);
a snapshot image acquiring instruction module that instructs to said storage device (100) on acquiring a snapshot image of said information resources stored in said information resource storage unit (110, 120) at any point in time;
a second provision module (209) generating module that generates a second provision module (220), wherein the second provision module (220) virtually provides a snapshot image stored in said snapshot image storage unit (130, 140) of said storage device (100); and
an information resource control device that comprises an activation processing module that activates said second provision module (220) and provides said snapshot images.

16. A method of providing a snapshot image in a computer system (1000) comprising a storage device (100) and an information resource control device,
wherein the storage device (100) stores information resources, and wherein the information resource control device is connected to said storage device (100) and controls said information resources, said method comprising:
acquiring a snapshot image of information resources stored in the storage device (100) at any point in time;
storing the acquired snapshot image in the storage device (100); and
providing the stored snapshot image.

17. A method of control of information resource in a computer system (1000) comprising a storage device (100) and an information resource control device,
wherein the storage device (100) stores the information resources, and wherein the information resource control device is connected to said storage device (100) and controls said information resources, said method comprising:
in said storage device (100):
receiving instructions to acquire a snapshot image of said information resources stored in said storage device (100) from said information resource control device;
acquiring said information resource snapshot image stored in said storage device (100) based on said instructions; and
storing said acquired snapshot image in said storage device (100); and
in said information resource control device:
providing said information resources stored in said storage device (100);
giving instructions to get said information resource snapshot image stored in said storage device (100) in relation to said storage device (100) at a specified time; and
providing said snapshot image from said provision module.

18. A snapshot image acquisition method comprising:
receiving instructions to acquire said information resource snapshot image from a control device that controls said information resources stored in said storage device (100) and that is connected to said storage;
acquiring said information resource snapshot image based on said instructions; and
storing said acquired snapshot image.

19. A computer readable medium storing a program for controlling a storage device (100), wherein the computer program is executed on a computer, said program comprising:
a program code of controlling a first provision module (210) that provides said information resources that are stored in said storage device (100);
a program code of acquiring a snapshot image of said information resources that are stored in said storage device (100) at any point in time, and of storing this in said storage device (100);
a program code of generating a second provision module (220) that is a virtual first provision module that provides said snapshot image that is stored in said storage device (100); and
a program code of activating said second provision module (220) and providing said snapshot image.

20. A computer readable medium storing a program for acquiring a snapshot image on a storage device (100), wherein the storage device (100) stores information resources, and wherein the computer program is executed on a computer, said program comprising:
a program code of receiving instructions to acquire said information resource snapshot image from a control device that controls said information resources stored in said storage device (100) that is connected to said storage;
a program code of acquiring said information resource snapshot image based on said instructions; and
a program code of storing said acquired snapshot image.
